**Europäisches Patentamt**

**European Patent Office**

**Office européen des brevets**

(19)

(11) Publication number : **0 352 120 B1**

(12)

# EUROPEAN PATENT SPECIFICATION

(45) Date of publication of patent specification :
08.04.92 Bulletin 92/15

(51) Int. Cl.⁵ : **C09K 5/00**

(21) Application number : **89307414.6**

(22) Date of filing : **20.07.89**

(54) Antifreeze agent for liquid coolants.

(30) Priority : **20.07.88 DE 3824672**

(43) Date of publication of application :
**24.01.90 Bulletin 90/04**

(45) Publication of the grant of the patent :
**08.04.92 Bulletin 92/15**

(84) Designated Contracting States :
**AT BE CH DE ES FR GB GR IT LI LU NL SE**

(56) References cited :
**DE-A- 2 938 868**
**DE-C- 1 492 522**
**FR-A- 2 180 833**
**US-A- 4 728 452**

(73) Proprietor : **The British Petroleum Company
p.l.c.
Britannic House Moor Lane
London EC2Y 9BU (GB)**

(72) Inventor : **Ernhardt, Wolfgang
Schulstrasse 6A
W-2081 Holm (DE)**
Inventor : **Wagnitz, Dieter
Witt Lönn 13
W-2083 Halstenbek (DE)**
Inventor : **Rommel, Werner
Vehrenkampstrasse 11A
W-2000 Hamburg 54 (DE)**

(74) Representative : **Ryan, Edward Terrence et al
BP INTERNATIONAL LIMITED Patents &
Agreements Division Chertsey Road
Sunbury-on-Thames Middlesex, TW16 7LN
(GB)**

EP 0 352 120 B1

## Description

The invention relates to an anti-freeze composition for liquid coolants, which composition is based on glycols and a corrosion inhibitor mixture which contains alkali metal borate, alkali metal silicate, alkali metal hydroxide, alkali metal nitrate, triazole, nitrophenol (which may be optionally substituted), mercaptobenzimidiazole derivatives and water as a solution-promoter and which has a pH-value between 7.0 and 9.0 after dilution with water in a ratio of 1:1 to 1:3 by volume.

Anti-freeze composition for liquid coolants are used in particular in the cooling systems of the engines of motor vehicles. The development in motor vehicle construction is in the direction of ever reducing maintenance requirements. Thus for many motor vehicle engines it is already envisaged that the coolant will remain in the cooling system for several years. As a result the demands on the additives contained in the anti-freeze composition increase steadily, particularly in relation to corrosion protection and protection against the formation of deposits, in particular in relation to light metals and their alloys which are employed on an ever increasing scale in engine construction.

Light metals are particularly sensitive to corrosion. Furthermore, the metallic parts in a cooling system are electrically connected to one another and can form galvanic elements together with the coolant.

Numerous inhibitors have been employed for corrosion protection in cooling systems. The best known inhibitors are borax, alkali metal nitrite, salts of benzoic acid and phosphoric acid, alkali metal carbonates, alkali metal hydroxides, amines, alkanolamines, benztriazole, sodium mercaptobenzthiazole and sodium metasilicate. The individual inhibitors have a corrosion inhibiting effect as a rule only for one metal or for a small group of metals. Thus different inhibitors must be combined with one another in anti-freeze compositions, however, additional difficulties occur as a result. Many of the usual additives have not only positive but also negative corrosion protection properties. They can reduce corrosion with certain metals but simultaneously promote the attack of the coolant on other metals. In the combination of different inhibitors it can happen that the favourable properties are suppressed and the unfavourable properties are increased. It is thus necessary in every case to make a particularly careful selection of inhibitors and the inhibitors must be matched to one another. Corrosion protection must be established by tests which are close to real conditions, as the properties of combinations of anti-freeze additives are in general not predictable or are only predictable to a limited extent.

The ever increasing demands on anti-freeze compositions with anti-corrosion properties already mentioned have led to the establishment of guidelines for the testing of the suitability of anti-freeze additives for the coolants of combusion engines. Such guidelines have been produced by "Forschungsvereinigung Verbrennungskraftmaschinen E.V. (FVV)". The guidelines currently in force are those of 1986 Volume R 443. These guidelines are directed in particular to corrosion phenomena as these appear in practical operation under the influence of chemical and physical variables such as water hardness, ageing and vibration as well as by overheating and the like.

It has been found that anti-freeze compositions of the type mentioned initially, which are known from DE-C 29 38 868 and which are a further development of those disclosed from DE-C 14 92 522 do not always meet the requirements of the FVV guidelines. This is particularly the case for the corrosion protection of aluminium alloys at high operating temperatures as well as the formation of insoluble precipitates.

The invention is therefore directed towards an anti-freeze composition of the type indicated above, that as a consequence of its selected additive combination has a good total anti-corrosion effect, which corresponds to the above FVV - guidelines and has improved properties in respect of aluminium or aluminium alloys, and which in addition suppresses the formation of insoluble precipitates in the cooling system.

According to the present invention an anti-freeze agent for liquid coolants on the basis of glycols and a corrosion-inhibitor mixture which contains alkali metal borate, alkali metal silicate, alkali metal hydroxide, alkali metal nitrate, triazole, a nitrophenol, a mercaptobenzimidazole derivative, and water as a solution-promoter and which has a pH value between 7.0 and 9.0 on dilution with water in the ratio of 1:1 to 1:3 is characterised by the following composition

(a) 0.75-5.0 weight % of alkali metal borate,
(b) 0.10-0.60 weight % of alkali metal nitrate,
(c) 0.01-0.50 weight % of alkali metal hydroxide,
(d) 0.05-0.5 weight % of alkali metal silicate,
(e) 0.05-0.15 weight % of ethoxylated mercaptobenzimidazole,
(f) 0.01-0.25 weight % of a triazole derivate,
(g) 0.005-0.15 weight % of a mercapto derivate and/or amino benzoic acid,
(h) 0.01-0.2 weight % of a nitrophenol which may optionally be substituted,
(i) 0.01-0.1 weight % of an alkali earth metal nitrate,
(k) 0.005-0.5 weight % of an alkali metal tungstate,

(l) 0.005-0.5 weight % of an alkali metal and/or ammonium molybdate,

(m) 0.001-0.25 weight % of a silicate stabiliser based on organic silicon compounds,

(n) 0.5-5.0 weight % of water.

(o) 0.10-2.0% by weight of a carboxylic dispersing agent and/or phosphoric acid and

(p) the balance (up to 100% by weight) of 1,2 glycols and/or their oligomers.

The quantities of additives given above are calculated on the basis of water-solvent free products, although the additives are partly supplied in commerce as hydrates or dissolving solvents and may be used in this form for the production of the anti-freeze composition of the invention.

The above additives are obtainable commercially. Where alkali metal salts are used the alkali metal salt may be lithium, sodium, or potassium, in particular sodium and/or potassium. The alkali earth metal salts used in the invention may in particular be magnesium and/or calcium salts.

The ethoxylated mercaptobenzimidazoles used in the invention are condensation products of ethylene oxide and mercaptobenzimidazole. It is preferred to use condensation products of mercaptobenzimidazole and ethylene oxide which on average have 5-10 ethylene oxide units per molecule. Benztriazole and tolyltriazole in particular may be used as triazole derivatives. Among the mercapto derivates may be particularly mentioned the sodium or potassium salts of mercaptobenzthiazole, mercaptothiazoline, dimercaptothiadiazole, mercaptotriazole and anthranilic acid.

Among typical examples of nitrophenols which are optionally substituted may be mentioned o-nitrophenol, m-nitrophenol, p-nitrophenol, 2,4-dinitrophenol, 2,6-dinitrophenol, 2,4,6-trinitrophenol, nitrocresol, dinitrocresol, trinitrocresol, mononitroxylenol, dinitroxylenol and trinitroxylenol.

Silicate stabilisers based on organic silicon compounds are known for anti-freeze compositions, for example, see EP-A 0 156 485; further commercially available products of this type are bifunctional silicon compounds which contain reactive anionic alkyl phosphonate groups and reactive sodium siliconate groups, as well as silylated derivates and cyclic anhydrides, eg. 3-(triethoxysilylpropyl)-succinic anhydride.

The dispersing agents for inhibiting the formation of deposits are commercially available. The deposits are in particular calcium containing deposits which can form on addition of hard water. The dispersing agents are known, even if for other purposes as in the washing composition sector. Specific dispersing agents which may be used are the polycarboxylic acids and phosphonic acids. Particularly preferred are the polycarboxylic acids based on homopolymers or copolymers of maleic anhydride and/or of acrylic or methacrylic acids, as well as phosphonic acids such as 1-hydroxy-ethylidene-1,2-diphosphonic acid (HEDP) and aminotris-(methylene phosphonic acid) (ATMP) See G. Jakobi A. Löhr, "Detergents Textile Washing, Principles and Practice), V.C.H. Verlagsgesellschaft mbH, Weinheim, 1987, pages 68, 72, 76 (1987).

Among typical representatives of the 1,2-glycols or their oligomers may be mentioned in particular ethylene glycol, propylene glycol, diethylene glycol, triethylene glycol, butylene glycol and the like. According to a preferred embodiment of the invention an anti-freeze composition has the following composition:

(a) 0.75-3.0 weight % of sodium tetraborate,

(b) 0.10-0.40 weight % of potassium nitrate,

(c) 0.01-0.50 weight % of sodium hydroxide,

(d) 0.05-0.40 weight % of sodium metasilicate,

(e) 0.05-0.15 weight % of ethoxylated mercaptobenzimidazole,

(f) 0.05-0.25 weight % of benz and/or tolyltriazole,

(g) 0.01-0.15 weight % of one or more of mercaptobenzthiazole, mercaptothiazoline, mercaptothiadiazole, mercaptotriazole and anthranilic acid,

(h) 0.05-0.18 weight % of a nitrophenol which may optionally be substituted,

(i) 0.005-0.10 weight % of calcium nitrate,

(j) 0.005-0.10 weight % of sodium tungstate,

(k) 0.005-0.10 weight % of ammonium molybdate,

(l) 0.02-0.25 weight % of a silicate stabiliser,

(m) 0.50-3.50 weight % of water

(n) 0.1-0.8 weight % of a water soluble polymeric dispersing agent based on maleic anhydride and/or

(o) 0.1-0.6 weight % of a water soluble polymeric dispersing agent based on polyacrylic acid and/or

(p) 0.1-0.6 weight % of a water soluble dispersing agent based on organic phosphonic acids, and

(q) the balance (to make up to 100 % weight) being ethylene glycol.

The weight quantities given above are based on water free or solvent free additives.

According to a further advantageous embodiment of the invention the anti-freeze composition has a content of two different dispersing agents in a total quantity of 0.2 to 2% by weight calculated on the total weight of the anti-freeze composition before dilution with water.

The invention is further illustrated by a preferred embodiment and by comparative tests set up below.

3

EXAMPLE

An anti-freeze composition according to the invention was prepared by mixing together the following components. The quantities given in brackets represent the water or solvent free compounds:

| | | |
|---|---|---|
| Borax | 3.00 % | (1.58 %) |
| $KNO_3$ | 0.30 % | |
| NaOH . 50 % | 0.45 % | (0.225 %) |
| $Na_2SiO_3$ . 5 $H_2O$ | 0.24 % | (0.13 %) |
| Water (de-mineralised) | 2.00 % | |
| Ethoxylated mercaptobenzimidazole | 0.09 % | |
| Tolyltriazol 50 % | 0.30 % | (0.15 %) |
| Anthranilic acid | 0.10 % | |
| p-Nitrophenol | 0.12 % | |
| $Ca(NO_3)_2$ . 4 $H_2O$ | 0.05 % | (0.028 %) |
| Na-Tungstate . 2 $H_2O$ | 0.05 % | (0.045 %) |
| $(NH_4)$ Molybdate . 4 $H_2O$ | 0.05 % | (0.047 %) |
| Silane Y 5560 [1] | 0.05 % | |
| Ethylene glycol | 92.50 % | |
| Belgard EV 2000 [2] | 0.40 % | (0.20 %) |
| POC HS 2020 [3] | 0.30 % | (0.15 %) |
| | 100.00 % | |

1. Silicate stabiliser of the formula
   $(CH_3O)_3SiCH_2CH_2CH_2-(OCH_2CH_2)_7OCH_3$
2. 47 – 53 % by weight aqueous solution of a polymer based on maleic acid anhydride; dispersing agent for addition to sea water distillation apparatus.
3. 50 weight % aqueous solution of a polyacrylic acid co-polymer (molecular weight about 1400), pH 1.0

The above anti-freeze composition according to the invention was tested according to the FVV guidelines, 1986 Edition, in particular in the heat corrosion test and the pressure ageing test. Comparative tests were carried out with three different commercially available anti-freeze compositions A, B and C. The composition of these is not known in detail but the following information is available from the producer.

Comparison product A:

a commercially available anti-freeze composition based on benzoate/sodium nitrite/borax/sodium metasilicate.

Comparison product B:

commercial anti-freeze composition based on sebacic acid according to MIL specification TS 10 177.

Comparison product C:

commercial silicate free anti-freeze composition based on phosphate.

Tables 1 and 2 contain the results of heat corrosion tests with the anti-freeze composition according to the example. The results of the tests on products A, B and C are brought together in Table 3.

Table 4 shows the results of the FVV pressure ageing tests for the anti-freeze composition of the example according the invention. The corresponding results for the comparison products A, B and C are given in Tables 5-7.

As can be seen from Tables, the anti-freeze composition of the invention is superior in the hot corrosion test to the comparison products. The anti-freeze composition of the invention also shows a clear superiority in the ageing test over the comparison products A and C.

The anti-freeze composition of the invention shows a somewhat poorer result than comparative product B in respect of AlCuMg2 after pre-cleaning, however the decisive factor is the material loss after the final cleaning and this is smaller with the composition of the example and with the comparative product B.

Some of the examples in the Tables below use hard water rather than distilled water. The hardness is quoted in German degrees of hardness (°dGH). The relationship between German hardness and other measurements of hardness is shown in Table 8.

## TABLE 1

### Hot Corrosion Test According To Example

### Weight Loss, Sample Temperature, Appearance

### wa = "warm ausgehaertet" (temper hardened)

### (Test Material: G-AlSi 10 Mg wa)

| Liquid | | Weight Change in Mg | Sample Temp. °C | Appearance |
|---|---|---|---|---|
| Water | Concentration | | | |
| De-mineralised Water | 20 Volume % | − 5.0 | 117 − 121 | Unchanged |
| 10° dGH | 20 Volume % | + 0 | 118 − 120 | Unchanged |
| 120 h Aged Test Liquid | 20 Volume % | − 15.0 | 116 − 117 | Unchanged |

## TABLE 2

### Change In The Experimental Liquid In The Hot Test

### (Test Material: G-AlSi 10 Mg wa)

| Liquid | | pH Value Begin/End | Hardness Begin/End | Appearance |
|---|---|---|---|---|
| Water | Concentration | | | |
| De-mineralised Water | 20 Volume % | 8.3 / 8.3 | 0 / 0 | yellow/clear |
| 10 dGH | 20 Volume % | 8.3 / 8.2 | 7.8 / 7.8 | yellow/clear |
| 120 h Aged Test Liquid | 20 Volume % | 8.1 / 8.0 | 7.7 / 7.6 | yellow/clear |

TABLE 3

Test Of Anti-freeze Compositions A, B and C According to FVV (1986 Edition)
FVV Hot Test (Test Material AlSi 10 Mg)

| Medium | Weight Change in Mg | Sample Temp. in °C | Corrosion | Appearance Of Test Metal | pH Value After The Test | °dGH After Test |
|---|---|---|---|---|---|---|
| A 20 Volume % With De-mineralised water | − 524.3 | 124–146 | Strong Attack | White Precipitate | 8.3 | 0 |
| A 20 Volume % With Water of 10°dGH | + 16.7 | 121–124 | Unchanged | Unchanged | 8.2 | 5.3 |
| A 20 Volume % After Pressure Aging | − 451.4 | 130–140 | Strong Attack | White Precipitate | 8.0 | 0.4 |
| B 20 Volume % With De-mineralised water | − 51.0 | 122–124 | Little Attack | Unchanged | 7.7 | Not Determinable |
| B 20 Volume % With Water of 10°dGH | − 28.5 | 122–125 | Little Attack | Unchanged | 7.6 | Not Determinable |
| B 20 Volume % After Pressure Aging | − 72.8 | 127–129 | Little Attack | Unchanged | 7.1 | Not Determinable |
| C 20 Volume % With De-mineralised Water | −1067.8 | 120–133 | Corrosion Of Edge Of Hole | Voluminous Precipitate | 8.3 | 0 |
| C 20 Volume % With Water of 10°dGH | − 206.4 | 142–150 | Strong Attack | Voluminous Precipitate | 8.2 | 1.3 |
| C 20 Volume % After Pressure Aging | − 960.1 | 129–145 | Corrosion Of Edge Of Hole | Voluminous Precipitate | 7.5 | 0.4 |

EP 0 352 120 B1

## TABLE 4

FVV Pressure Aging Test
Product: Anti-freeze Composition (Example)
Concentration: 20 Volume % Test Liquid 80 Volume % Water With Hardness Of 10°dGH

| Test Metal | Weight Change in $g/m^2$ | | | | Visual Appearance Of The Test Sample |
| --- | --- | --- | --- | --- | --- |
| | Pre-cleaning | | Final cleaning | | |
| | Packet 1 | Packet 2 | Packet 1 | Packet 2 | |
| Grey Cast Iron | + 0.5 | + 1.0 | − 1.3 | − 0.4 | Smooth Metallic |
| Steel | + 0.1 | + 0.1 | − 0.4 | − 0.4 | Smooth Metallic |
| Copper | − 0.1 | − 0.1 | − 0.1 | − 0.1 | Smooth Metallic |
| Brass | − 1.2 | − 0.7 | − 1.3 | − 1.4 | Smooth Metallic |
| AlCuMg 2 | − 3.5 | − 2.6 | − 3.7 | − 2.8 | Smooth Metallic |
| G-AlSi 10 Mg wa | − 1.9 | − 3.0 | − 2.5 | − 3.8 | Smooth Metallic |
| AlMn | − 3.0 | − 2.6 | − 3.8 | − 3.0 | Smooth Metallic |
| Solder | − 3.0 | − 1.9 | − 3.9 | − 2.4 | Smooth Metallic |
| pH Value | | | | | |
| Age Of Composition | Fresh | 24 h | 48 h | 120 h | |
| pH Value | 8.3 | 8.3 | 8.2 | 8.1 | |
| Water Hardness °dGH | 7.8 | 7.7 | 7.7 | 7.7 | |

The appearance of the rotating parts was not changed.

## TABLE 5

FW Pressure Aging Test
Product: Anti-freeze Composition A
Concentration: 20 Volume % Test Liquid 80 Volume % Water With Hardness Of 10°dGH

| Test Metal | Weight Change in $g/m^2$ | | | | Visual Appearance Of The Test Sample |
|---|---|---|---|---|---|
| | Pre-cleaning | | Final cleaning | | |
| | Packet 1 | Packet 2 | Packet 1 | Packet 2 | |
| Grey Cast Iron | 1.5 | − 0.5 | − 2.1 | − 4.3 | Tarnish |
| Steel | 0.7 | 0.3 | − 0.3 | − 0.2 | Tarnish |
| Copper | − 0.8 | − 1.2 | − 2.0 | − 2.3 | Yellow Tarnish |
| Brass | − 0.5 | − 1.0 | − 1.9 | − 2.2 | Dark Coating |
| AlCuMg 2 | − 72.4 | −101.5 | − 96.4 | −125.6 | Dark Matt Grey |
| G-AlSi 10 Mg wa | − 82.1 | −103.6 | −110.4 | −122.6 | Dark Matt Grey |
| AlMn | − 16.5 | − 13.3 | − 35.1 | − 43.4 | Dark Matt Grey |
| Solder | − 1.0 | − 1.0 | − 1.8 | − 1.9 | Black |
| pH Value | | | | | |
| Age Of Composition | Fresh | 24 h | 48 h | 120 h | |
| pH Value | 8.3 | 8.2 | 8.1 | 8.0 | |
| Water Hardness °dGH | 8.2 | 0.4 | 0.4 | 0.4 | |

The rotating parts had a heavy white precipitate.

EP 0 352 120 B1

## TABLE 6

FVV Pressure Aging Test
Product: Anti-freeze Composition B
Concentration: 20 Volume % Test Liquid 80 Volume % Water With Hardness Of 10°dGH

| Test Metal | Weight Change in g/m$^2$ | | | | Visual Appearance Of The Test Sample |
| --- | --- | --- | --- | --- | --- |
| | Pre-cleaning | | Final cleaning | | |
| | Packet 1 | Packet 2 | Packet 1 | Packet 2 | |
| Grey Cast Iron | 0.9 | 0.5 | − 2.8 | − 2.7 | Lightly dark coloured |
| Steel | 0.2 | 0.1 | − 0.7 | − 0.6 | Lightly dark coloured |
| Copper | − 0.2 | − 0.1 | − 1.0 | − 0.9 | Tarnished |
| Brass | − 0.8 | − 0.3 | − 1.4 | − 1.2 | Lightly dark coloured |
| AlCuMg 2 | − 2.6 | − 1.6 | − 9.1 | − 6.3 | Matt black layer |
| G-AlSi 10 Mg wa | − 14.4 | − 6.5 | − 28.5 | − 17.9 | Matt black layer |
| AlMn | − 5.6 | − 3.8 | − 12.9 | − 10.5 | Matt black layer |
| Solder | 7.5 | 10.2 | 6.7 | 7.6 | Tarnished |
| pH Value | | | | | |
| Age Of Composition | Fresh | 24 h | 48 h | 120 h | |
| pH Value<br><br>Water Hardness °dGH | 7.5<br>not measurable | 7.8 | 7.6 | 7.1 | |

The rotating parts had a heavy white precipitate.

EP 0 352 120 B1

TABLE 7

FVV Pressure Aging Test
Product: Anti-freeze Composition C
Concentration: 20 Volume % Test Liquid 80 Volume % Water With Hardness Of 10°dGH

| Test Metal | Weight Change in $g/m^2$ | | | | Visual Appearance Of The Test Sample |
|---|---|---|---|---|---|
| | Pre-cleaning | | Final cleaning | | |
| | Packet 1 | Packet 2 | Packet 1 | Packet 2 | |
| Grey Cast Iron | 0.5 | 0.6 | − 1.1 | − 0.8 | Lightly dark coloured |
| Steel | 0.5 | 0.3 | − 0.5 | − 0.7 | Lightly dark coloured |
| Copper | 0.3 | 0.7 | − 0.1 | − 0.4 | Dark coating |
| Brass | 0.6 | 1.0 | 0.0 | 0.4 | Coating |
| AlCuMg 2 | − 73.9 | − 63.1 | −106.1 | − 90.8 | Excavation of whole surface |
| G-AlSi 10 Mg wa | −490.0 | −456.7 | −497.8 | −464.4 | Excavation of whole surface |
| AlMn | − 26.1 | − 12.7 | − 51.3 | − 35.2 | Excavation of whole surface |
| Solder | − 8.7 | − 6.8 | − 8.7 | − 6.8 | Tarnished |
| pH Value | | | | | |
| Age Of Composition | Fresh | 24 h | 48 h | 120 h | |
| pH Value | 8.2 | 7.7 | 7.5 | 7.5 | |
| Water Hardness °dGH | 7.0 | 0.6 | 0.5 | 0.4 | |

A very heavy white precipitate was observed in the rotating parts.

TABLE 8

| | Hardness $c(Ca^{2+}+Mg^{2+})$ in mmol/l | Hardness in mval/l | $CaCO_3$ in ppm | °d | °e | °f | °a |
|---|---|---|---|---|---|---|---|
| Hardness $c(Ca^{2+}+Mg^{2+})$ in mmol/l | 1 | 2 | 100 | 5.6 | 7.0 | 10.00 | 5.85 |
| Hardness in mmol/l | 0.5 | 1 | 50 | 2.8 | 3.51 | 5.00 | 2.925 |
| $CaCO_3$ in ppm | 0.01 | 0.02 | 1 | 0.056 | 0.070 | 0.10 | 0.05828 |
| 1 German degree °d | 0.1788 | 0.357 | 17.85 | 1 | 1.250 | 1.788 | 1.041 |
| 1 English degree °e | 0.1425 | 0.285 | 14.29 | 0.7999 | 1 | 1.429 | 0.8324 |
| 1 French degree °f | 0.10 | 0.20 | 10.00 | 0.5999 | 0.700 | 1 | 0.5828 |
| 1 American degree °a | 0.1716 | 0.342 | 17.16 | 0.061 | 1.001 | 1.710 | 1 |

EP 0 352 120 B1

**Claims**

1. An anti-freeze agent for liquid coolants on the basis of glycols and a corrosion-inhibitor mixture which contains alkali metal borate, alkali metal silicate, alkali metal hydroxide, alkali metal nitrate, triazole, a nitrophenol, a mercaptobenzimidazole derivative, and water as a solution-promoter and which has a pH value between 7.0 and 9.0 on dilution with water in the ratio of 1:1 to 1:3 by volume is characterised by the following composition

(a) 0.75-5.0 weight % of alkali metal borate,
(b) 0.10-0.60 weight % of alkali metal nitrate,
(c) 0.01-0.50 weight % of alkali metal hydroxide,
(d) 0.05-0.5 weight % of alkali metal silicate,
(e) 0.05-0.15 weight % of ethoxylated mercaptobenzimidazole,
(f) 0.01-0.25 weight % of a triazole derivate,
(g) 0.005-0.15 weight % of a mercapto derivate and/or amino benzoic acid,
(h) 0.01-0.2 weight % of a nitrophenol which may optionally be substituted,
(i) 0.001-0.1 weight % of an alkali earth metal nitrate,
(k) 0.005-0.5 weight % of an alkali metal tungstate,
(l) 0.005-0.5 weight % of an alkali metal and/or ammonium molybdate,
(m) 0.001-0.25 weight % of a silicate stabiliser based on organic silicon compounds,
(n) 0.5-5.0 weight % of water.
(o) 0.10-2.0% by weight of a carboxylic dispersing agent and/or phosphonic acid dispersing agents for the reduction of deposits, and
(p) the balance up to 100% by weight of the composition being 1,2 glycols and/or their oligomers.

2. The composition according to Claim 1 characterised in that it has the following composition:
(a) 0.75-3.0 weight % of sodium tetraborate,
(b) 0.10-0.40 weight % of potassium nitrate,
(c) 0.01-0.50 weight % of sodium hydroxide,
(d) 0.05-0.40 weight % of sodium metasilicate,
(e) 0.05-0.15 weight % of ethoxylated mercaptobenzimidazole,
(f) 0.05-0.25 weight % of benz and/or tolyltriazole,
(g) 0.01-0.15 weight % of one or more of mercaptobenzthiazole, mercaptothiazoline, mercaptothiadiazole, mercaptotriazole and anthranilic acid,
(h) 0.05-0.18 weight % of a nitrophenol which may optionally be substituted,
(i) 0.005-0.10 weight % of calcium nitrate,
(j) 0.005-0.10 weight % of sodium tungstate,
(k) 0.005-0.10 weight % of ammonium molybdate,
(l) 0.02-0.25 weight % of a silicate stabiliser, and
(m) 0.50-3.50 weight % of water,
(n) 0.1-0.8 weight % of a water soluble polymeric dispersing agent based on maleic anhydride and/or
(o) 0.1-0.6 weight % of a water soluble polymeric dispersing agent based on polyacrylic acid and/or
(p) 0.1-0.6 weight % of a water soluble dispersing agent based on organic phosphonic acids, and
(q) the balance (to make up to 100 % weight) being ethylene glycol.

3. The composition according to either of Claims 1 or 2, characterised in that it contains two different dispersing agents in a total quantity of 0.2 to 2.0 % by weight, calculated on the total weight of the anti-freeze composition before dilution with water.


**Patentansprüche**

1. Frostschutzmittel für Kühlflüssigkeiten auf der Basis von Glykolen und einer korrosionshemmenden Mischung, die Alkalimetallborat, Alkalimetallsilikat, Alkalimetallhydroxid, Alkalimetallnitrat, Triazol, ein Nitrophenol, ein Mercaptobenzimidazolderivat und Wasser als Lösungspromotor enthält und die bei Verdünnung mit Wasser im Volumsverhältnis von 1:1 bis 1:3 einen pH-Wert zwischen 7,0 und 9,0 aufweist, gekennzeichnet durch die folgende Zusammensetzung:
(a) 0,75-5,0 Gew-% Alkalimetallborat,
(b) 0,10-0,60 Gew-% Alaklimetallnitrat,

13

(c) 0,01-0,50 Gew-% Alkalimetallhydroxid,

(d) 0,05-0,5 Gew-% Alkalimetallsilikat,

(e) 0,05-0,15 Gew-% ethoxyliertes Mercaptobenzimidazol,

(f) 0,01-0,25 Gew-% eines Triazolderivats,

(g) 0,005-0,15 Gew-% eines Mercaptoderivates und/oder Aminobenzoesäure,

(h) 0,01-0,2 Gew-% eines Nitrophenols, das wahlweise substituiert sein kann,

(i) 0,001-0,1 Gew-% eines Erdalkalimetallnitrats,

(k) 0,005-0,5 Gew-% eines Alkalimetallwolframats,

(l) 0,005-0,5 Gew-% eines Alkalimetall- und/oder Ammoniummolybdats,

(m) 0,01-0,25 Gew-% eines auf organischen Siliziumverbindungen basierenden Silikatstabilisators,

(n) 0,5-5,0 Gew-% Wasser,

(o) 0,10-2,0 Gew-% eines Dispergiermittels auf Basis von Carbonsäure und/oder Phosphonsäure zur Verringerung von Ablagerungen, und

(p) der Rest auf 100 Gew-% der Zusammensetzung an 1,2-Glykolen und/oder deren Oligomeren.

2. Zusammensetzung nach Anspruch 1, dadurch gekennzeichnet, daß sie die folgende Zusammensetzung aufweist:

(a) 0,75-3,0 Gew-% Natriumtetraborat,

(b) 0,10-0,40 Gew-% Kaliumnitrat,

(c) 0,01-0,50 Gew-% Natriumhydroxid,

(d) 0,05-0,40 Gew-% Natriummetasilikat,

(e) 0,05-0,15 Gew-% ethoxyliertes Mercaptobenzimidiazol,

(f) 0,05-0,25 Gew-% Benz- und/oder Tolyltriazol,

(g) 0,01-0,15 Gew-% einer oder mehrerer der Substanzen, ausgewählt aus der aus Mercaptobenzthiazol, Mercaptothiazolin, Mercaptothiadiazol, Mercaptotriazol und Anthranilsäure bestehenden Gruppe,

(h) 0,05-0,18 Gew-% eines Nitrophenols, das wahlweise substituiert sein kann,

(i) 0,005-0,10 Gew-% Kalziumnitrat,

(j) 0,005-0,10 Gew-% Natriumwolframat,

(k) 0,005-0,10 Gew-% Ammoniummolybdat,

(l) 0,02-0,25 Gew-% eines Silikatstabilisators, und

(m) 0,50-3,50 Gew-% Wasser,

(n) 0,1-0,6 Gew-% eines wasserlöslichen polymeren Dispergiermittels auf der Basis von Maleinsäureanhydrid und/oder

(o) 0,1-0,6 Gew-% eines wasserlöslichen polymeren Dispergiermittels auf der Basis von Polyacrylsäure und/oder

(p) 0,1-0,6 Gew-% eines wasserlöslichen Dispergiermittels auf der Basis organischer Phosphonsäuren und

(q) der Rest (auf 100 Gew-%) an Ethylenglycol.

3. Zusammensetzung nach einem der Ansprüche 1 oder 2, dadurch gekennzeichnet, daß sie zwei verschiedene Dispergiermittel in einer Gesamtmenge von 0,2 bis 2,0 Gew-%, berechnet aufgrund des Gesamtgewichts der Frostschutzzusammensetzung vor dem Verdünnen mit Wasser, enthält.

## Revendications

1. Agent antigel destiné à des liquides de refroidissement, à base de glycols et d'un mélange d'inhibiteurs de corrosion qui contient un borate de métal alcalin, un silicate de métal alcalin, un hydroxyde de métal alcalin, un nitrate de métal alcalin, du triazole, un nitrophénol, un dérivé de mercaptobenzimidazole, et de l'eau servant d'agent de mise en solution, et qui possède une valeur de pH de 7,0 à 9,0 par dilution avec de l'eau en un rapport de 1:1 à 1:3 en volume, caractérisé par la composition suivante

(a) 0,75 à 5,0 % en poids d'un borate de métal alcalin,

(b) 0,10 à 0,60 % en poids d'un nitrate de métal alcalin,

(c) 0,01 à 0,50 % en poids d'un hydroxyde de métal alcalin,

(d) 0,05 à 0,5 % en poids d'un silicate de métal alcalin,

(e) 0,05 à 0,15 % en poids d'un mercaptobenzimidazole éthoxylé,

(f) 0,01 à 0,25 % en poids d'un dérivé de triazole,

(g) 0,005 à 0,15 % en poids d'un dérivé à fonction mercapto et/ou d'acide aminobenzoïque,

(h) 0,01 à 0,2 % en poids d'un nitrophénol qui peut être facultativement substitué,

(i) 0,01 à 0,1 % en poids d'un nitrate de métal alcalino-terreux,

(k) 0,005 à 0,5 % en poids d'un tungstate de métal alcalin,

(l) 0,005 à 0,5 % en poids d'un molybdate de métal alcalin et/ou d'ammonium,

(m) 0,01 à 0,25 % en poids d'un stabilisant du type silicate, à base de composés organiques de silicium,

(n) 0,5 à 5,0 % en poids d'eau,

(o) 0,10 à 2,0 % en poids d'agents dispersants du type acide carboxylique et/ou acide phosphonique pour la réduction des dépôts, et

(p) le pourcentage restant, jusqu'à 100 % en poids de la composition, consistant en 1,2-glycols et/ou leurs oligomères.

2. Composition suivant la revendication 1, caractérisée en ce qu'elle possède la composition suivante :

(a) 0,75 à 3,0 % en poids de tétraborate de sodium,

(b) 0,10 à 0,40 % en poids de nitrate de potassium,

(c) 0,01 à 0,50 % en poids d'hydroxyde de sodium,

(d) 0,05 à 0,40 % en poids de métasilicate de sodium,

(e) 0,05 à 0,15 % en poids de mercaptobenzimidazole éthoxylé,

(f) 0,05 à 0,25 % en poids de benzo- et/ou tolyl-triazole,

(g) 0,01 à 0,15 % en poids d'un ou plusieurs composés choisis entre le mercaptobenzothiazole, la mercaptothiazoline, le mercaptothiadiazole, le mercaptotriazole et l'acide anthranilique,

(h) 0,05 à 0,18 % en poids d'un nitrophénol qui peut être facultativement substitué,

(i) 0,005 à 0,10 % en poids de nitrate de calcium,

(j) 0,005 à 0,10 % en poids de tungstate de sodium,

(k) 0,005 à 0,10 % en poids de molybdate d'ammonium,

(l) 0,02 à 0,25 % en poids d'un stabilisant du type silicate, et

(m) 0,50 à 3,50 % en poids d'eau,

(n) 0,1 à 0,8 % en poids d'un agent dispersant polymérique hydrosoluble à base d'Anhydride maléique, et/ou

(o) 0,1 à 0,6 % en poids d'un agent dispersant polymérique hydrosoluble à base d'un polymère d'acide acrylique, et/ou

(p) 0,1 à 0,6 % en poids d'un agent dispersant hydrosoluble à base d'acides phosphoniques organiques, et

(q) le pourcentage restant (pour atteindre 100 % en poids) étant constitué d'éthylène-glycol.

3. Composition suivant la revendication 1 ou 2, caractérisée en ce qu'elle contient deux agents dispersants différents en une quantité totale de 0,2 à 2,0 % en poids, le calcul étant effectué sur la base du poids total de la composition antigel avant dilution avec de l'eau.